(19)

Europäisches Patentamt
European Patent Office
Office européen des brevets

(11) **EP 3 213 945 A1**

(12) **EUROPEAN PATENT APPLICATION**
published in accordance with Art. 153(4) EPC

(43) Date of publication:
**06.09.2017 Bulletin 2017/36**

(21) Application number: **15854193.8**

(22) Date of filing: **21.10.2015**

(51) Int Cl.:
**B60H 1/22** (2006.01)

(86) International application number:
**PCT/JP2015/005294**

(87) International publication number:
**WO 2016/067567 (06.05.2016 Gazette 2016/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **31.10.2014  JP 2014222794**

(71) Applicant: **Panasonic Intellectual Property
Management Co., Ltd.
Osaka-shi, Osaka 570-6207 (JP)**

(72) Inventors:
• **TSUKAMOTO, Kohei
Osaka 540-6207 (JP)**

• **KURODA, Kentaro
Osaka 540-6207 (JP)**
• **TANIGUCHI, Katsuji
Osaka 540-6207 (JP)**
• **NODA, Yoshitoshi
Osaka 540-6207 (JP)**
• **KODERA, Yuji
Osaka 540-6207 (JP)**

(74) Representative: **Schwabe - Sandmair - Marx
Patentanwälte Rechtsanwalt
Partnerschaft mbB
Joseph-Wild-Straße 20
81829 München (DE)**

(54) **AIR-CONDITIONING CONTROL DEVICE AND VEHICLE AIR-CONDITIONING DEVICE, AND METHOD FOR DETERMINING FAULT IN ELECTROMAGNETIC VALVE OF AIR-CONDITIONING CONTROL DEVICE**

(57)    Provided is an air-conditioning control device that controls an air-conditioning device including: a heat exchanger that exchanges heat between a refrigerant discharged from a compressor and a heating medium; and an opening and closing portion that opens and closes a refrigerant passage between the compressor and the heat exchanger according to a command. The air-conditioning control device is provided with: a pressure acquisition unit that acquires a detection value from a pressure sensor that detects the pressure of a refrigerant flowing through the heat exchanger; a temperature acquisition unit that acquires a detection value from a temperature sensor that detects the temperature of a heating medium flowing through the heat exchanger; and a determination unit that, in the case where a command is issued to cause a refrigerant to flow through the opening and closing portion in a state where the refrigerant is not flowing through the opening and closing portion, determines whether or not the opening and closing portion is normally opened to cause the refrigerant to flow through the heat exchanger, by using the pressure of the refrigerant detected by the pressure sensor and the temperature of the heating medium detected by the temperature sensor.

FIG. 1

**Description**

TECHNICAL FIELD

The present invention relates to an air-conditioning control device, a vehicle air-conditioning device, and a method for determining a fault in an electromagnetic valve of an air-conditioning control device.

BACKGROUND ART

As a vehicle air-conditioning device, there has conventionally been a system including a refrigerant passage for cooling and a refrigerant passage for heating, and provided with an ON-OFF valve (for example, three-way valve) for switching the two refrigerant passages (for example, see Patent Literature 1). A compressor, a condenser, an expansion valve, and an evaporator are provided on the refrigerant passages, and the compressor is shared by the refrigerant passage for cooling and the refrigerant passage for heating. This vehicle air-conditioning device controls the ON-OFF valve to cause a refrigerant to flow through one of the two refrigerant passages, thereby switching an operating mode such as a cooling mode or a heating mode.

Citation List

Patent Literature

PTL1: U.S. Patent No. 6640889

SUMMARY OF THE INVENTION

An object of the present invention is to provide an air-conditioning control device that can quickly detect an abnormal flow of a refrigerant caused by a fault in an ON-OFF valve with reduced cost, and a vehicle air-conditioning device provided with the air-conditioning control device.

An air-conditioning control device according to one aspect of the present invention controls an air-conditioning device including a first heat exchanger and a first opening and closing portion. The first heat exchanger exchanges heat between a high-temperature and high-pressure refrigerant discharged from a compressor and air or a first heating medium which is a coolant. The first opening and closing portion opens and closes a refrigerant passage between the compressor and the first heat exchanger according to a command. The air-conditioning control device further includes a pressure acquisition unit, a temperature acquisition unit, and a determination unit. The pressure acquisition unit acquires a detection value from a first pressure sensor that detects a pressure of a refrigerant flowing from the first heat exchanger. The temperature acquisition unit acquires a detection value from a first temperature sensor that detects a temperature of the first heating medium flowing through the first heat exchanger. When a command is issued to cause a refrigerant to flow through the first opening and closing portion in a state where the refrigerant is not flowing through the first opening and closing portion, the determination unit determines whether or not the first opening and closing portion is normally opened to cause the refrigerant to flow through the first heat exchanger, by using the pressure of the refrigerant detected by the first pressure sensor and the temperature of the first heating medium detected by the first temperature sensor.

A vehicle air-conditioning device according to one aspect of the present invention is an air-conditioning control device that controls an air-conditioning device including: a first heat exchanger that exchanges heat between a high-temperature and high-pressure refrigerant discharged from a compressor and air or a first heating medium which is a coolant; and a first opening and closing portion that opens and closes a refrigerant passage between the compressor and the first heat exchanger according to a command. The vehicle air-conditioning device includes: a second heat exchanger that exchanges heat between a high-temperature and high-pressure refrigerant discharged from the compressor and air or a second heating medium that is a coolant; a second opening and closing portion that opens and closes a refrigerant passage between the compressor and the second heat exchanger according to a command; a first pressure sensor that detects a pressure of a refrigerant flowing from the first heat exchanger; a second pressure sensor that detects a pressure of a refrigerant flowing from the second heat exchanger; a pressure acquisition unit that acquires detection values from the first pressure sensor and the second pressure sensor; a first temperature sensor that detects a temperature of the first heating medium flowing in the first heat exchanger; a second temperature sensor that detects a temperature of the second heating medium flowing in the second heat exchanger; a temperature acquisition unit that acquires detection values from the first temperature sensor and the second temperature sensor; and a determination unit that, when a command is issued to cause a refrigerant to flow through the first opening and closing portion in a state where the refrigerant is not flowing through the first opening and closing portion, determines whether or not the first opening and closing portion is normally opened to cause the refrigerant to flow through the first heat exchanger, by using the pressure of the refrigerant detected by the first pressure sensor and the temperature of the first heating medium detected by the first temperature sensor. The determination unit further determines that, when a command is issued to cause a refrigerant to flow through the second opening and closing portion in a state where the refrigerant is not flowing through the second opening and closing portion, determines whether or not the second opening and closing portion is normally opened to cause the refrigerant to flow through the second heat exchanger, by using the pressure of the refrigerant detected by the second pressure sensor and the temperature of the second heating medium detected by the second temperature sensor.

The air-conditioning control device detects, based on a determination result of the determination unit, an occurrence of an abnormal situation in which the compressor is activated and the first opening and closing portion and the second opening and closing portion are both closed.

According to the present invention, an abnormal flow of a refrigerant caused by a fault in an ON-OFF valve can quickly be detected with reduced cost.

BRIEF DESCRIPTION OF DRAWINGS

FIG. 1 is a diagram illustrating a configuration of a vehicle air-conditioning device according to an exemplary embodiment of the present invention.

FIG. 2 is a flowchart illustrating a process for determining a fault in an electromagnetic valve performed by an air-conditioning controller in FIG. 1.

DESCRIPTION OF EMBODIMENT

Prior to the description of an exemplary embodiment of the present invention, a problem of a conventional device will briefly be described. Upon switching an operating mode, if an ON-OFF valve is not opened due to a fault and two refrigerant passages are thereby simultaneously blocked, a refrigerant discharged from a compressor would have nowhere to go, so the discharge pressure in the compressor would be abnormally increased. To detect such an abnormal condition, one can consider providing a pressure sensor for detecting the pressure of the refrigerant between a discharge port of the compressor and the ON-OFF valve. In this configuration, however, the pressure sensor is exposed to the high-temperature and high-pressure refrigerant discharged from the compressor, so the pressure sensor needs to be configured to have high heat resistance, which leads to an increase in cost. Also, to detect the abnormal condition mentioned above, one can consider the ON-OFF valve detecting its own open or closed state and outputting the detection result to a controller. Such ON-OFF valve, however, is expensive and increases the component cost.

An exemplary embodiment of the present invention will be described below in detail with reference to the drawings.

EXEMPLARY EMBODIMENT

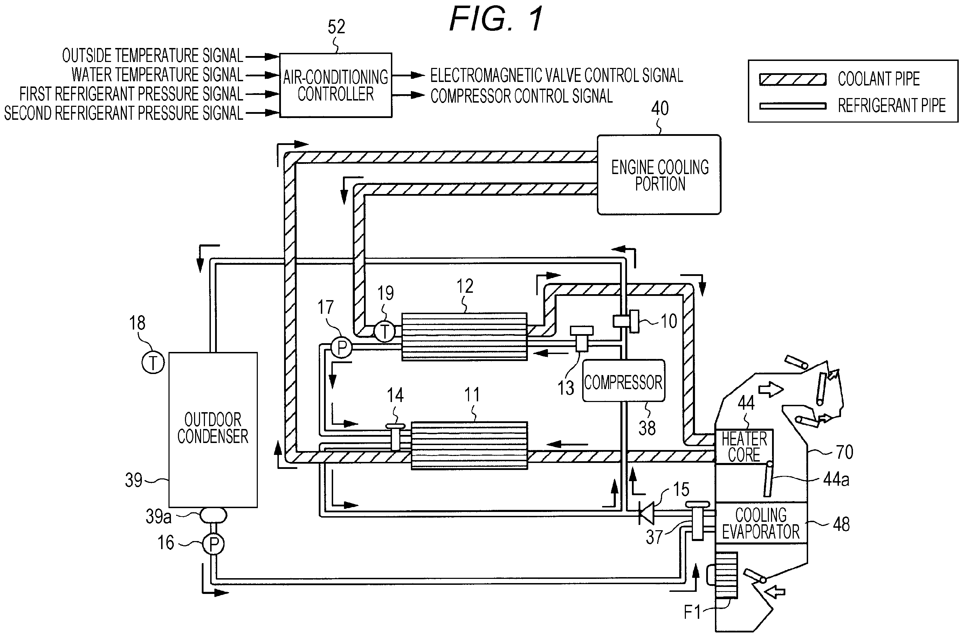

FIG. 1 is a diagram illustrating a configuration of a vehicle air-conditioning device according to a first exemplary embodiment of the present invention.

The vehicle air-conditioning device according to the exemplary embodiment of the present invention is a device mounted on a vehicle for performing air-conditioning in a vehicle interior.

The vehicle air-conditioning device according to the exemplary embodiment includes compressor 38, engine cooling portion 40, heater core 44, cooling evaporator 48, expansion valve 37, outdoor condenser (corresponding to a first heat exchanger) 39, check valve 15, water-refrigerant evaporator 11, water-refrigerant condenser (corresponding to a second heat exchanger) 12, expansion valve 14, and a coolant pipe and a refrigerant pipe which connect between these components. The vehicle air-conditioning device according to the exemplary embodiment further includes electromagnetic valves 10 and 13, first temperature sensor 18, second temperature sensor 19, first pressure sensor 16, second pressure sensor 17, and air-conditioning controller (corresponding to an air-conditioning control device) 52. Heater core 44 and cooling evaporator 48 are disposed in an intake passage of HVAC (Heating, Ventilation, and air conditioning) 70. HVAC 70 is provided with fan F1 that circulates intake air.

Compressor 38 is driven by engine power or electric power, compresses the suctioned low-temperature refrigerant to a high-temperature and high-pressure state, and discharges the resultant refrigerant. A low-pressure refrigerant is delivered through a junction pipe from water-refrigerant evaporator 11 or from cooling evaporator 48. The compressed refrigerant is delivered to water-refrigerant condenser 12 or outdoor condenser 39.

Engine cooling portion 40 includes a water jacket that circulates a coolant around the engine and a pump that circulates the coolant through the water jacket and radiates heat from the engine to the coolant flowing through the water jacket. The pump is rotated by engine power, for example. Engine cooling portion 40 may be provided with a radiator that radiates heat to outside air when the amount of waste heat from the engine is increased.

The coolant may be an antifreeze such as LLC (Long Life Coolant) for transporting heat.

Heater core 44 is a device for performing heat exchange between the coolant and air, and is disposed in the intake passage in HVAC 70 that supplies air to the vehicle interior. Heater core 44 is supplied with the heated coolant and radiates heat into the intake air to be sent to the vehicle interior (air to be sent to the vehicle interior) during a heating operation. Heater core 44 can adjust the amount of passing air according to the opening degree of door 44a. Door 44a is openable under an electric control. Door 44a may be referred to as an air-mix door.

Although not particularly limited, the passage for the coolant is configured to cause the coolant to sequentially circulate and flow through engine cooling portion 40, water-refrigerant condenser 12, heater core 44, and water-refrigerant evaporator 11, and then, back to engine cooling portion 40. Note that various modifications are possible for the passage for the coolant. For example, a first passage for the coolant and a second passage for the coolant may be formed, the first passage causing the coolant to circulate and flow through engine cooling portion 40, water-refrigerant condenser 12, and heater core 44, the second passage causing the coolant to circulate and flow through water-refrigerant evaporator 11 and a radiator. In addition, the passage for the coolant may be configured such that the coolant delivered from engine cooling portion 40 is separated into two passages to flow through water-refrigerant evaporator 11 and water-refrigerant condenser 12 in a parallel manner, and then, supplied to heater core 44.

Cooling evaporator 48 is a device for performing heat exchange between a low-temperature and low-pressure refrigerant and air, and disposed in the intake passage in HVAC 70. Cooling evaporator 48 is supplied with the low-temperature and low-pressure refrigerant in a cooling mode, a dehumidification mode, and a temperature control mode, and cools the intake air to be supplied to the vehicle interior.

Expansion valve 37 expands a high-pressure refrigerant to a low-temperature and low-pressure state and discharges the refrigerant to cooling evaporator 48. Expansion valve 37 is disposed close to cooling evaporator 48. Expansion valve 37 may be a thermal expansion valve (TXV) having a function of automatically adjusting the amount of the discharged refrigerant according to the temperature of the refrigerant sent from cooling evaporator 48.

Outdoor condenser 39 has a passage for the flow of the refrigerant and a passage for the flow of the air, is placed near the front of the vehicle in an engine room, for example, and exchanges heat between the refrigerant and the outside air. In the cooling mode or the dehumidification mode, outdoor condenser 39 is supplied with a high-temperature and high-pressure refrigerant, and discharges heat from the refrigerant to the outside air. The outside air is blown over outdoor condenser 39 by a fan, for example. Reservoir tank 39a may be provided to outdoor condenser 39 at the outlet side of the refrigerant.

Water-refrigerant evaporator 11 (evaporator) includes a passage for the flow of the low-temperature and low-pressure refrigerant and a passage for the flow of the coolant, and exchanges heat between the refrigerant and the coolant. In a predetermined operating mode, water-refrigerant evaporator 11 is supplied with the low-temperature and low-pressure refrigerant from expansion valve 14, and transfers heat from the coolant to the low-temperature and low-pressure refrigerant. Thus, water-refrigerant evaporator 11 vaporizes the low-temperature and low-pressure refrigerant. A refrigerant inlet of water-refrigerant evaporator 11 is communicated with expansion valve 14 through a pipe, and a refrigerant outlet is communicated with a pipe which is joined to an intake port of compressor 38.

Water-refrigerant condenser 12 (condenser) includes a passage for the flow of the high-temperature and high-pressure refrigerant and a passage for the flow of the coolant, and exchanges heat between the refrigerant and the coolant. In a predetermined operating mode, water-refrigerant condenser 12 is supplied with the high-temperature and high-pressure refrigerant from compressor 38 and heat is radiated from the high-temperature and high-pressure refrigerant to the coolant. Thus, water-refrigerant condenser 12 condenses the high-temperature and high-pressure refrigerant. A refrigerant inlet of water-refrigerant condenser 12 is communicated with a discharge port of compressor 38 through a pipe, and a refrigerant outlet is communicated with expansion valve 14 through a pipe.

Electromagnetic valves 10 and 13 are valves that switch between opening and closing of the refrigerant pipe under the control from later-described air-conditioning controller 52. Electromagnetic valve 10 (corresponding to a first opening and closing portion) is provided on the refrigerant pipe between compressor 38 and outdoor condenser 39. Electromagnetic valve 13 (corresponding to a second opening and closing portion) is provided on the refrigerant pipe between compressor 38 and water-refrigerant condenser 12. When electromagnetic valve 10 is opened and electromagnetic valve 13 is closed, a refrigerant passage for cooling is formed through which the refrigerant discharged from compressor 38 flows through outdoor condenser 39, expansion valve 37, cooling evaporator 48, and check valve 15, and then, returns to compressor 38. In addition, when electromagnetic valve 10 is closed and electromagnetic valve 13 is opened, a refrigerant passage for heating is formed through which the refrigerant discharged from compressor 38 flows through water-refrigerant condenser 12, expansion valve 14, and water-refrigerant evaporator 11, and then, returns to compressor 38.

Expansion valve 14 expands a high-pressure refrigerant sent from water-refrigerant condenser 12 and delivers this refrigerant to water-refrigerant evaporator 11. Expansion valve 14 may be a thermal expansion valve (TXV) having a function of automatically adjusting the flow amount of the refrigerant based on the temperature of the refrigerant at the refrigerant outlet port of water-refrigerant evaporator 11.

Check valve 15 is a valve provided to the refrigerant pipe between compressor 38 and cooling evaporator 48 to prevent a backflow of the refrigerant in an operating mode in which the refrigerant does not flow into outdoor condenser 39 and cooling evaporator 48.

Second temperature sensor 19 detects the temperature (also referred to as a water temperature) of the coolant and outputs a water temperature signal indicating the water temperature to air-conditioning controller 52. Second temperature sensor 19 detects the temperature of the coolant at the inlet of water-refrigerant condenser 12, for example. Second temperature sensor 19 may detect the temperature at other portions such as at the outlet of engine cooling portion 40, so long as the temperature of the coolant flowing through water-refrigerant condenser 12 can be estimated from the detection result.

First temperature sensor 18 detects the temperature (also referred to as an outside temperature) of the outside air and outputs an outside temperature signal indicating the outside temperature to air-conditioning controller 52. First temperature sensor 18 detects the temperature of the outside air, at the inlet, introduced into outdoor condenser 39, for example. First temperature sensor 18 may detect the temperature at other portions such as on a location distant from outdoor condenser 39, so long as the temperature of the outside air flowing in outdoor condenser 39 can be estimated from the detection result.

First pressure sensor 16 detects the pressure of the refrigerant sent from outdoor condenser 39, and outputs a first refrigerant pressure signal indicating the detected pressure to air-conditioning controller 52. First pressure sensor 16 may detect the pressure of the refrigerant in the middle of the refrigerant passage of outdoor condenser 39. Preferably, the first pressure sensor is disposed on the refrigerant passage at the downstream side with respect to the refrigerant inlet of outdoor condenser 39. According to this arrangement, heat resistance property allowed for first pressure sensor 16 can be lowered.

Second pressure sensor 17 detects the pressure of the refrigerant sent from water-refrigerant condenser 12, and outputs a second refrigerant pressure signal indicating this detected pressure to air-conditioning controller 52. Second pressure sensor 17 may detect the pressure of the refrigerant in the middle of the refrigerant passage of water-refrigerant condenser 12. Preferably, second pressure sensor is disposed on the refrigerant passage at the downstream side with respect to the refrigerant inlet of water-refrigerant condenser 12. According to this arrangement, heat resistance property allowed for second pressure sensor 17 can be lowered.

Air-conditioning controller 52 can be composed of a microcomputer or a sequencer. Air-conditioning controller 52 performs open and close control of electromagnetic valves 10 and 13 by outputting an electromagnetic valve control signal as an opening and closing command. According to this control, the operating mode of the vehicle air-conditioning device is switched.

In addition, air-conditioning controller 52 determines a fault in electromagnetic valves 10 and 13. For this determination, air-conditioning controller 52 acquires the first refrigerant pressure signal indicating the pressure of the refrigerant from outdoor condenser 39 from first pressure sensor 16, and acquires the second refrigerant pressure signal indicating the pressure of the refrigerant from water-refrigerant condenser 12 from second pressure sensor 17. Air-conditioning controller 52 also acquires the outside temperature signal from first temperature sensor 18 and the water temperature signal from second temperature sensor 19.

Air-conditioning controller 52 estimates the temperature of the refrigerant based on the acquired first refrigerant pressure signal. Since a constant relationship is established between pressure and temperature of the refrigerant, the refrigerant temperature can easily be obtained from the refrigerant pressure when the flow of the refrigerant is stopped. Air-conditioning controller 52 determines whether or not following formula (1) is satisfied using the estimated refrigerant temperature and the outside temperature.

$$(\text{Estimated temperature of refrigerant from outdoor condenser 39}) - (\text{outside temperature}) < K1 \quad ...(1)$$

In formula (1), K1 is a predetermined threshold, and set to a few °C, for example.

When the flow of the refrigerant in outdoor condenser 39 is stopped, the stagnant refrigerant in outdoor condenser 39 exchanges heat with outside air, so that the difference between the refrigerant temperature and the outside temperature is decreased. If there is a variation in the outside temperature, the pressure of the refrigerant also varies with this variation. On the other hand, when the high-temperature and high-pressure refrigerant is supplied to outdoor condenser 39 from compressor 38, the pressure of the refrigerant in outdoor condenser 39 rises and the estimated refrigerant temperature also rises, regardless of the outside temperature. Therefore, when the determination formula (1) is satisfied, it can be determined that the refrigerant is not flowing in outdoor condenser 39, so that the electromagnetic valve 10 can be determined to be closed.

In addition, air-conditioning controller 52 estimates the refrigerant temperature based on the acquired second refrigerant pressure signal, and determines whether or not following formula (2) is satisfied using the estimated refrigerant temperature and the temperature of the coolant.

$$\text{(Estimated temperature of refrigerant from water-refrigerant condenser 12 – temperature of coolant)} < K2 \quad ...(2)$$

In formula (2), K2 is a predetermined threshold, and set to a few °C, for example.

When the flow of the refrigerant in water-refrigerant condenser 12 is stopped, the stagnant refrigerant in water-refrigerant condenser 12 exchanges heat with the coolant, so that the difference between the refrigerant temperature and the coolant temperature is decreased. If there is a variation in the coolant temperature, the pressure of the refrigerant also varies with this variation. On the other hand, when the high-temperature and high-pressure refrigerant is supplied to water-refrigerant condenser 12 from compressor 38, the pressure of the refrigerant in water-refrigerant condenser 12 rises and the estimated refrigerant temperature also rises, regardless of the coolant temperature. Therefore, when the determination formula (2) is satisfied, it can be determined that the refrigerant is not flowing in water-refrigerant condenser 12, so that the electromagnetic valve 13 can be determined to be closed.

Air-conditioning controller 52 makes determination whether formula (1) and formula (2) are satisfied in the following cases. The first case is such that, from a state where electromagnetic valve 10 is opened and electromagnetic valve 13 is closed, electromagnetic valve 10 is switched to be closed and electromagnetic valve 13 is switched to be opened. The second case is such that, from a state where electromagnetic valve 10 is closed and electromagnetic valve 13 is opened, electromagnetic valve 10 is switched to be opened and electromagnetic valve 13 is switched to be closed. The third case is such that, from a state where both electromagnetic valves 10 and 13 are closed, electromagnetic valve 10 is switched to be opened and the operation of compressor 38 is started. The fourth case is such that, from a state where both electromagnetic valves 10 and 13 are closed, electromagnetic valve 13 is switched to be opened and the operation of compressor 38 is started. The fifth case is such that, in a state where it is supposed that electromagnetic valve 10 is opened and electromagnetic valve 13 is closed, the operation of compressor 38 is started. The sixth case is such that, in a state where it is supposed that electromagnetic valve 10 is closed and electromagnetic valve 13 is opened, the operation of compressor 38 is started. The opening or closing of electromagnetic valves 10 and 13 and the start of the operation of compressor 38 are executed after a command is issued from air-conditioning controller 52. If one or both of electromagnetic valves 10 and 13 has a fault, it is likely that both electromagnetic valves 10 and 13 are closed in the first to sixth cases. At this timing, whether formula (1) or (2) is satisfied or not is determined, whereby it can be determined that one of electromagnetic valves 10 and 13, which should be opened, is wrongly closed.

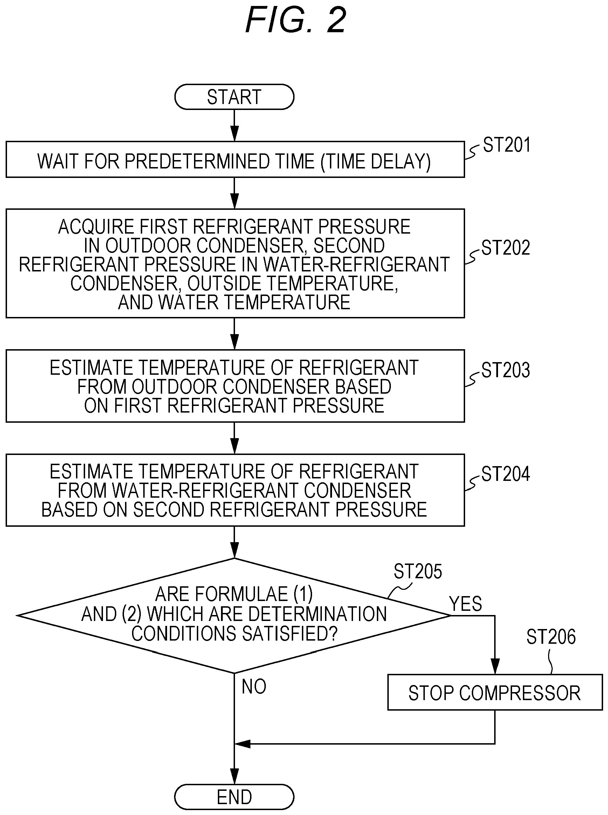

Next, the process for determining a fault in an electromagnetic valve will be described with reference to FIG. 2, which process is started by air-conditioning controller 52 in the first to fourth cases.

In step ST201, air-conditioning controller 52 waits (time delay) until a predetermined time has elapsed. The reason for this is such that air-conditioning controller 52 waits until the refrigerant discharged from compressor 38 flows a little through outdoor condenser 39 or water-refrigerant condenser 12 and the pressure of the refrigerant is increased.

In step ST202, air-conditioning controller 52 acquires the pressure of the refrigerant from outdoor condenser 39, the pressure of the refrigerant from water-refrigerant condenser 12, the outside temperature, and the water temperature. The configuration for performing the process in step ST202 corresponds to a pressure acquisition unit and a temperature acquisition unit.

In step ST203, the refrigerant temperature is estimated based on the pressure of the refrigerant from outdoor condenser 39. In step ST204, the refrigerant temperature is estimated based on the pressure of the refrigerant from water-refrigerant condenser 12.

In step ST205, it is determined whether or not the relationship between the temperature of the refrigerant from outdoor condenser 39 and the outside temperature satisfies formula (1) and the relationship between the temperature of the refrigerant from water-refrigerant condenser 12 and the temperature of the coolant satisfies formula (2). The configuration for performing the process in step S205 corresponds to a determination unit.

If the determination result in step S205 is YES, air-conditioning controller 52 proceeds to step ST206, and if the determination result in step S205 is NO, air-conditioning controller 52 ends the process for determining a fault in an electromagnetic valve.

In step ST206, air-conditioning controller 52 determines that both electromagnetic valves 10 and 13 are closed, and brings compressor 38 to an emergency stop. Accordingly, even when both electromagnetic valves 10 and 13 are simultaneously closed due to a fault, an abnormal rise of the pressure of the refrigerant discharged from compressor 38 can be avoided.

As described above, according to the present exemplary embodiment, it is determined whether or not the value obtained by subtracting the outside temperature from the temperature of the refrigerant from outdoor condenser 39 is less than predetermined threshold K1, by using the detection result of first pressure sensor 16, which has low heat resistance property, and first temperature sensor 18, and based on this determination, it is determined whether or not the refrigerant is flowing through the refrigerant passage for cooling. In addition, it is determined whether or not the value obtained by subtracting the coolant temperature from the temperature of the refrigerant from water-refrigerant condenser 12 is less than predetermined threshold K2, by using the detection result of second pressure sensor 17, which has low heat resistance property, and second temperature sensor 19. Based on the determination results, it can be determined whether or not the refrigerant is flowing through the refrigerant passage for heating or through the refrigerant passage for cooling, and thus, a fault in the electromagnetic valve can be determined with reduced cost without the need of an expensive component. In addition, when it is determined that two electromagnetic valves are simultaneously closed, the operation of the compressor is stopped, whereby the damage of a system including the compressor can be avoided.

Note that the present invention is not limited to the configuration and method specifically described in the exemplary embodiment. For example, the above-mentioned exemplary embodiment indicates the process for determining a fault in an electromagnetic valve to detect an abnormal condition in which two electromagnetic valves 10 and 13 located on the discharge port of compressor 38 are both closed. However, the present invention may be applied to a process for determining, when a command to switch one electromagnetic valve 10 (or electromagnetic valve 13) from a closed state to an open state is issued, whether the target valve is normally brought into the open state.

In addition, the exemplary embodiment indicates the outdoor condenser using air as a first heating medium as the first heat exchanger that exchanges heat between a refrigerant and the first heating medium, and the water-refrigerant condenser using a coolant as a second heating medium as the second heat exchanger that exchanges heat between the coolant and the second heating medium. However, both the first heat exchanger and the second heat exchanger may be configured to exchange heat between a refrigerant and air, or both may be configured to exchange heat between a refrigerant and a coolant.

In addition, the exemplary embodiment illustrates, in the drawing, one example of a pattern of a refrigerant passage and a pattern of a coolant passage. However, the present invention is similarly applicable to an air-conditioning device having various patterns of a refrigerant passage and various patterns of a coolant passage.

INDUSTRIAL APPLICABILITY

The vehicle air-conditioning device according to the present invention is applicable to a vehicle, such as an automobile, including an internal combustion engine.

REFERENCE MARKS IN THE DRAWINGS

  10, 13: electromagnetic valve
  11: water-refrigerant evaporator
  12: water-refrigerant condenser
  14: expansion valve
  15: check valve
  16: first pressure sensor
  17: second pressure sensor
  18: first temperature sensor
  19: second temperature sensor
  37: expansion valve
  38: compressor
  39: outdoor condenser
  39a: reservoir tank
  40: engine cooling portion
  44: heater core
  44a: door
  48: cooling evaporator
  52: air-conditioning controller
  70: HVAC
  F1: fan

**Claims**

1. An air-conditioning control device for controlling an air-conditioning device that includes: a first heat exchanger that exchanges heat between a high-temperature and high-pressure refrigerant discharged from a compressor and air or a first heating medium that is a coolant; and a first opening and closing portion that opens and closes a refrigerant passage between the compressor and the first heat exchanger according to a command, the air-conditioning control device comprising:

   a pressure acquisition unit that acquires a detection value from a first pressure sensor that detects a pressure of a refrigerant flowing from the first heat exchanger;
   a temperature acquisition unit that acquires a detection value from a first temperature sensor that detects a temperature of the first heating medium flowing through the first heat exchanger; and
   a determination unit that, in a case where a command is issued to cause a refrigerant to flow through the first opening and closing portion in a state where the refrigerant is not flowing through the first opening and closing portion, determines whether the first opening and closing portion is normally opened to cause the refrigerant to flow through the first heat exchanger, by using the pressure of the refrigerant detected by the first pressure sensor and the temperature of the first heating medium detected by the first temperature sensor.

2. The air-conditioning control device according to claim 1, wherein the case where a command is issued to cause a refrigerant to flow through the first opening and closing portion in a state where the refrigerant is not flowing through the first opening and closing portion is a case where a command is issued to bring the first opening and closing portion into an open state from a closed state or a case where a command is issued to start an operation of the compressor in a state where the first opening and closing portion is supposed to be opened.

3. The air-conditioning control device according to claim 1, wherein the determination unit determines that the refrigerant is not normally flowing through the first heat exchanger, when a difference between a temperature of the refrigerant estimated based on the pressure of the refrigerant detected by the first pressure sensor and a temperature of the first heating medium detected by the first temperature sensor is smaller than a predetermined threshold.

4. A vehicle air-conditioning device that is an air-conditioning control device for controlling an air-conditioning device that includes: a first heat exchanger that exchanges heat between a high-temperature and high-pressure refrigerant discharged from a compressor and air or a first heating medium that is a coolant; and a first opening and closing portion that opens and closes a refrigerant passage between the compressor and the first heat exchanger according to a command, the vehicle air-conditioning device comprising:

   a second heat exchanger that exchanges heat between a high-temperature and high-pressure refrigerant discharged from the compressor and air or a second heating medium that is a coolant;
   a second opening and closing portion that opens and closes a refrigerant passage between the compressor and the second heat exchanger according to a command;
   a first pressure sensor that detects a pressure of a refrigerant flowing from the first heat exchanger;
   a second pressure sensor that detects a pressure of a refrigerant flowing from the second heat exchanger;
   a pressure acquisition unit that acquires detection values from the first pressure sensor and the second pressure sensor;
   a first temperature sensor that detects a temperature of the first heating medium flowing in the first heat exchanger;
   a second temperature sensor that detects a temperature of the second heating medium flowing in the second heat exchanger;
   a temperature acquisition unit that acquires detection values from the first temperature sensor and the second temperature sensor; and
   a determination unit that, in a case where a command is issued to cause a refrigerant to flow through the first opening and closing portion in a state where the refrigerant is not flowing through the first opening and closing portion, determines whether the first opening and closing portion is normally opened to cause the refrigerant to flow through the first heat exchanger, by using the pressure of the refrigerant detected by the first pressure sensor and the temperature of the first heating medium detected by the first temperature sensor, and
   in the case where a command is issued to cause a refrigerant to flow through the second opening and closing portion in a state where the refrigerant is not flowing through the second opening and closing portion, determines whether the second opening and closing portion is normally opened to cause the refrigerant to flow through the second heat exchanger, by using the pressure of the refrigerant detected by the second pressure sensor and the temperature of the second heating medium detected by the second temperature sensor, wherein

the air-conditioning control device detects, based on a determination result of the determination unit, an occurrence of an abnormal situation in which the compressor is activated and the first opening and closing portion and the second opening and closing portion are both closed.

5. The vehicle air-conditioning device according to claim 4, wherein
the case where a command is issued to cause a refrigerant to flow through the second opening and closing portion in a state where the refrigerant is not flowing through the second opening and closing portion is a case where a command is issued to bring the second opening and closing portion into an open state from a closed state or a case in which a command is issued to start an operation of the compressor in a state where the second opening and closing portion is supposed to be opened.

6. The vehicle air-conditioning device according to claim 4, wherein
the first pressure sensor is provided on the refrigerant passage at the downstream side with respect to a refrigerant inlet of the first heat exchanger, and
the second pressure sensor is provided on the refrigerant passage at the downstream side with respect to a refrigerant inlet of the second heat exchanger.

7. The vehicle air-conditioning device according to claim 4, wherein
the first heat exchanger is an outdoor condenser that exchanges heat between a refrigerant and outside air, and
the second heat exchanger is a water-refrigerant condenser that exchanges heat between a refrigerant and a coolant.

8. A method for determining a fault in an electromagnetic valve of an air-conditioning control device controlling an air-conditioning device that includes: a first heat exchanger that exchanges heat between a high-temperature and high-pressure refrigerant discharged from a compressor and air or a first heating medium that is a coolant; a first opening and closing portion that opens and closes a refrigerant passage between the compressor and the first heat exchanger according to a command; a second heat exchanger that exchanges heat between a high-temperature and high-pressure refrigerant discharged from the compressor and air or a second heating medium that is a coolant; a second opening and closing portion that opens and closes a refrigerant passage between the compressor and the second heat exchanger according to the command; a first pressure sensor that detects a pressure of a first refrigerant flowing from the first heat exchanger; a first temperature sensor that detects a temperature of the first heating medium flowing in the first heat exchanger; a second pressure sensor that detects a pressure of a second refrigerant flowing from the second heat exchanger; a second temperature sensor that detects a temperature of the second heating medium flowing in the second heat exchanger; and a controller that issues the command and acquires detection values from the first pressure sensor, the first temperature sensor, the second pressure sensor, and the second temperature sensor, the method comprising:

in a case where a command is issued to switch the first opening and closing portion to an open state from a closed state; in a case where a command is issued to start an operation of the compressor in a state where the first opening and closing portion is supposed to be opened; in the case where a command is issued to switch the second opening and closing portion to an open state from a closed state; or in a case where a command is issued to start the operation of the compressor in a state where the second opening and closing portion is supposed to be opened,

acquiring detection values from the first pressure sensor, the first temperature sensor, the second pressure sensor, and the second temperature sensor;

estimating a first refrigerant temperature based on the pressure of the first refrigerant detected by the first pressure sensor;

estimating a second refrigerant temperature based on the pressure of the second refrigerant detected by the second pressure sensor; and

determining that the first opening and closing portion and the second opening and closing portion are both closed, when a difference between the first refrigerant temperature and the temperature of the first heating medium detected by the first temperature sensor is smaller than a predetermined threshold, and a difference between the second refrigerant temperature and the temperature of the second heating medium detected by the second temperature sensor is smaller than a predetermined threshold.

FIG. 1

OUTSIDE TEMPERATURE SIGNAL
WATER TEMPERATURE SIGNAL
FIRST REFRIGERANT PRESSURE SIGNAL
SECOND REFRIGERANT PRESSURE SIGNAL

52

AIR-CONDITIONING CONTROLLER

ELECTROMAGNETIC VALVE CONTROL SIGNAL
COMPRESSOR CONTROL SIGNAL

COOLANT PIPE
REFRIGERANT PIPE

40

ENGINE COOLING PORTION

18

17

19

12

10

13

COMPRESSOR

38

OUTDOOR CONDENSER

14

11

44

HEATER CORE

70

44a

39

48

COOLING EVAPORATOR

39a

15

16

37

F1

EP 3 213 945 A1

## FIG. 2

START

WAIT FOR PREDETERMINED TIME (TIME DELAY) — ST201

ACQUIRE FIRST REFRIGERANT PRESSURE IN OUTDOOR CONDENSER, SECOND REFRIGERANT PRESSURE IN WATER-REFRIGERANT CONDENSER, OUTSIDE TEMPERATURE, AND WATER TEMPERATURE — ST202

ESTIMATE TEMPERATURE OF REFRIGERANT FROM OUTDOOR CONDENSER BASED ON FIRST REFRIGERANT PRESSURE — ST203

ESTIMATE TEMPERATURE OF REFRIGERANT FROM WATER-REFRIGERANT CONDENSER BASED ON SECOND REFRIGERANT PRESSURE — ST204

ARE FORMULAE (1) AND (2) WHICH ARE DETERMINATION CONDITIONS SATISFIED? — ST205

YES

STOP COMPRESSOR — ST206

NO

END

## INTERNATIONAL SEARCH REPORT

| | International application No. |
|---|---|
| | PCT/JP2015/005294 |

### A. CLASSIFICATION OF SUBJECT MATTER
*B60H1/22*(2006.01)i

According to International Patent Classification (IPC) or to both national classification and IPC

### B. FIELDS SEARCHED

Minimum documentation searched (classification system followed by classification symbols)
B60H1/22

Documentation searched other than minimum documentation to the extent that such documents are included in the fields searched

| | | | | |
|---|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | US 6640889 B1 (Shane A.Harte),<br>04 November 2003 (04.11.2003),<br>column 4, line 5 to column 5, line 36; fig. 1<br>to 3<br>& GB 2386681 A            & DE 10309781 A<br>& FR 2836657 A | 1-2,4-7<br>3,8 |
| Y | JP 64-75840 A (Hitachi, Ltd.),<br>22 March 1989 (22.03.1989),<br>page 2, upper right column, lines 3 to 11<br>(Family: none) | 1-2,4-7 |
| Y | JP 8-128752 A (Sanyo Electric Co., Ltd.),<br>21 May 1996 (21.05.1996),<br>paragraph [0026]<br>(Family: none) | 1-2,4-7 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 13 January 2016 (13.01.16) | 26 January 2016 (26.01.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2015/005294

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2012-82992 A  (Yanmar Co., Ltd.),<br>26 April 2012 (26.04.2012),<br>paragraph [0009]<br>(Family: none) | 1-2,4-7 |
| Y<br>A | JP 9-42784 A  (Hitachi, Ltd.),<br>14 February 1997 (14.02.1997),<br>paragraphs [0049] to [0050]<br>(Family: none) | 1-2,4-7<br>3,8 |
| Y<br>A | JP 2002-243240 A  (Daikin Industries, Ltd.),<br>28 August 2002 (28.08.2002),<br>paragraphs [0002], [0017]<br>(Family: none) | 1-2,4-7<br>3,8 |

Form PCT/ISA/210 (continuation of second sheet) (January 2015)

**EP 3 213 945 A1**

**Patent documents cited in the description**

- US 6640889 B